(19) Europäisches Patentamt
European Patent Office
Office européen des brevets

(11) EP 0 738 194 B1

(12) **EUROPÄISCHE PATENTSCHRIFT**

(45) Veröffentlichungstag und Bekanntmachung des
Hinweises auf die Patenterteilung:
**25.02.1998 Patentblatt 1998/09**

(51) Int. Cl.⁶: **B23D 57/00**, B28D 1/08

(21) Anmeldenummer: 95903709.4

(86) Internationale Anmeldenummer:
**PCT/AT95/00001**

(22) Anmeldetag: **03.01.1995**

(87) Internationale Veröffentlichungsnummer:
**WO 95/18692 (13.07.1995 Gazette 1995/30)**

(54) **SEILSÄGEMASCHINE**

CABLE-SAW MACHINE

SCIE MECANIQUE A CABLE

(84) Benannte Vertragsstaaten:
**AT BE CH DE FR IT LI**

(30) Priorität: **07.01.1994 AT 15/94**

(43) Veröffentlichungstag der Anmeldung:
**23.10.1996 Patentblatt 1996/43**

(73) Patentinhaber: **Plattner, Josef**
**6200 Gallzein/Jenbach (AT)**

(72) Erfinder: **Plattner, Josef**
**6200 Gallzein/Jenbach (AT)**

(74) Vertreter:
**Torggler, Paul, Dr. et al**
**Patentanwälte**
**Dr. Paul Torggler**
**Dr. Engelbert Hofinger**
**Wilhelm-Greil-Strasse 16**
**6020 Innsbruck (AT)**

(56) Entgegenhaltungen:
**EP-A- 0 078 920          EP-A- 0 279 305**
**EP-A- 0 339 777          DE-A- 4 220 454**
**US-A- 4 016 856          US-A- 4 735 188**
**US-A- 5 060 628**

**Beschreibung**

Die Erfindung bezieht sich auf eine Seilsägemaschine zum Sägen von Beton, Mauerwerk, Naturstein und dergleichen mit einem mit diamanthaltigen Schneidperlen bestückten Sägeseil , bestehend aus einem die Maschinenteile tragenden Grundkörper, einem Seilzugmotor, der über eine Seilantriebsrolle die geschlossene Sägeseilschleife antreibt, einer Vorschubeinheit, je einer Schwenkrolle zur Führung des einlaufenden und des auslaufenden Sägeseiltrums und einem über eine Steuerleitung mit der Seilsägemaschine verbundenen Steuerkasten.

Es sind Seilsägeverfahren im Natursteinbereich bekannt als bewährtes Trennverfahren. Dabei kommen schienengeführte Anlagen zum Gewinnen von Blöcken im Steinbruch vor, mit Seillängen bis zu 140 Meter. Weiters bekannt sind stationäre Seilsägemaschinen zur Weiterverarbeitung der gewonnenen Natursteinblöcke mit bis zu 15 Meter Seillänge. Das Seilsägeverfahren verdrängt dabei teilweise das Blocksägen mit großdimensionierten Kreissägeblättern mit Durchmessern bis zu 4 Metern. Eine Ausführungsform von stationären Seilsägemaschinen für Formschnitte zeigt DE-A 3041830. Diese Ausführungsform ist für handgeführte Formgebung vorgesehen. Ausführungsformen für stationäre Seilsägemaschinen für Formschnitte unter Verwendung spezieller NC-Steuerungstechnik sind bekannt. Die Seillänge bei der Gattung der Formschnittseilsägen ist bis etwa 5 Meter, die Werkstoffe sind dabei alle Arten von dekorativem Naturstein mit eher geringer Schnittiefe.

Im Bereich Hoch- und Tiefbau werden mobile Seilsägeanlagen hauptsächlich zum Bearbeiten von armiertem und unarmiertem Beton eingesetzt.

Oft sind die Stahlarmierungsanteile erheblich, was hohe Anforderungen an das verwendete Seilwerkzeug und vor allem an hochangepaßte Seilsägemaschinentechnik stellt. Die Ortsverhältnisse an den Baustellen sind meist sehr beengt. Es sollte in allen räumlichen Lagen geschnitten werden können, wie Wandschnitte, Deckenschnitte und Bodenschnitte.

Im Einsatzbereich des Bauwesens sind entsprechend dem Stand der Technik Wandsägen mit Diamantkreissägeblättern ein verbreitetes Verfahren zum Ausschneiden von Öffnungen in Bauwerken und zum Abbruch von Bauwerken und Bauwerksteilen. Der Durchmesser des Kreissägeblattes ist dabei abhängig von der benötigten Schnittiefe bzw. bedingt durch die Wandstärke des Bauteils. Es kommen Blattdurchmesser bei Wandsägen bis zu 2 Metern vor. Mit der Wandsägemethode sind exakte Ecken der Maueröffnungen nur mit durchmesser- bzw. wandstärkeabhängigen Schnittüberläufen möglich, was unter Umständen eine erhebliche und unerlaubte zusätzliche Festigkeitsbeeinträchtigung des Bauwerkes verursacht. Ein verfahrenstypischer Nachteil der Wandsägen tritt besonders bei seitlichem Arbeiten oder bei Überkopfarbeiten auf. Es ist das Anbringen der kompletten Maschine an der zu trennenden Stelle unbedingt erforderlich und dadurch können erhebliche Schwierigkeiten und Gefahren für das Bedienungspersonal entstehen.

Weiters muß die Wandsägemaschine für jeden Schnitt neu in Stellung gebracht und befestigt werden. Das Wandsägen erweist sich dadurch trotz seiner relativ hohen Mobilität als teures Verfahren. Im Anwendungsgebiet des Bauwesens werden daher Seilsägen zum Abbruch oder zur nachträglichen Einbringung von Öffnungen in Bauwerke in Konkurrenz zu den Kreissägeverfahren vermehrt eingesetzt. Das Seilsägeverfahren ist im Baubereich relativ jung und ersetzt hier mehr und mehr die Wandsägen mit diamantsegmentbestückten Sägeblättern und auch das Herausbohren mit diamantsegmentbestückten Hohlbohrern durch ineinandergreifende Folgebohrungen.

Die Zerspanungstheorie des Seilsägeverfahrens ist prinzipiell sehr gut geeignet zur Ablösung dieser herkömmlichen Trennverfahren im Bauwesen durch die folgend zusammengefaßten Hauptvorteile:

- energetisch günstiger

- leiser im Betrieb

- rationelleres Arbeiten

- das Werkzeug ist als Seil flexibel und erfordert geringen Transportaufwand

Allerdings weisen Seilsägemaschinen für den Baubereich nach dem Stand der Technik erhebliche Mängel und Nachteile auf. Oftmals wird ein Bohrständer statt mit einer Bohrmaschine oder eine Wandsägemaschine statt mit einem Kreissägeblatt lediglich mit einer Seilantriebsrolle bestückt und zwischen die Schnittstelle und die Maschine eine zusätzliche Seilführungseinheit gesetzt.

Die US-A 5060628 zeigt eine solche Seilführungseinheit, bestehend aus einem Gestell und einem oder mehreren Rollenpaaren jeweils für den Seileintritt und den Seilaustritt aus dem Werkstück. Dabei wird die Seilführungseinheit zur Seilführung und Seilumlenkung zwischen Werkstück und Maschine befestigt. Damit ist die Anwendbarkeit der schienengeführten Seilsägemaschinen, wie sie aus dem Steinbruchbereich bekannt sind, für die Betonbearbeitung im Baubereich zwar erreicht worden, jedoch ist eine gesonderte maschinelle Einheit neben der eigentlichen Sägemaschine notwendig, während die Seilsägemaschine meist herkömmlich in einem Schienensystem in einiger Entfernung der Schnittstelle geführt wird.

Die US-A 5060 628 zeigt zur Erhöhung der geometrischen Erreichbarkeit verschiedener Schnittstellen eine Schwenkvorrichtung zwischen einer Seilsägemaschine und dem Werkstück zur winkeligen Umlenkung des Seils. Dabei werden die Seillaufebene durch das Werkstück und die Seillaufebene durch die Maschine stufenlos in ihrem Winkel zueinander einstellbar etwa im Bereich von 180 ° bei Senkrechtschnitten. Bei Waagrechtschnitten wird eine weitere nach dem Stand der Technik der in US-A 5060 628 beanspruchten Schwenkvorrichtung zwischen Seilsägemaschine und Werkstück vorgeschlagen.

Es ergibt sich dadurch eine räumlich stark ausgedehnte Gesamtanlage mit zu geringer Wendigkeit und erhöhtem Bedienungs- und Installationsaufwand.

Die DE-A 4220454 zeigt eine Seilsägemaschine gemäß dem Oberbegriff des Patentanspruches 1, die zum Einbringen eines Schlitzes in eine Gebäudewand dient. Die gesamte Seilsägemaschine ist mit Rollen auf dem Untergrund parallel entlang der Gebäudewand verfahrbar, wodurch der Hauptteil der dem Schnittfortschritt entsprechenden frei werdenden Seillänge ausgleichbar ist. Ein kleiner Anteil der frei werdenden Seillänge wird innerhalb der Maschine durch einen in normaler Richtung zur Gebäudewand verfahrbaren, in Führungsstangen gleitenden Schlitten ausgeglichen. Der Schlitten mit den horizontalen Führungsstangen gleitet zusätzlich in vier weiteren vertikalen Führungsstangen zum Einstellen und Ausgleichen der Höhe der horizontalen Schnittebene, gebildet durch die Sägeseilschlinge in der Gebäudewand.

Als Antrieb für die Bewegung des Schlittens normal zur Gebäudewand dient eine selbsthemmende Zahnstange/Ritzel/Elektromotor-Einheit. Eine ebensolche Einheit ist für die Bewegungsrichtung der gesamten Maschine parallel zur Gebäudewand vorgesehen.

Es obliegt dabei nur der Geschicklichkeit und Feinfühligkeit des Bedienungspersonals, diese schweren, selbsthemmenden Bauelemente ständig seilschonend zu justieren und die ruckartigen Vorschubbewegungen der gesamten Maschine und des Querschlittens wechselnd zu koordinieren, da im Querschlitten nur geringe Seilspeichermöglichkeit vorzufinden ist. Diese Lösung erlaubt keine auch nur zeitweilige, selbsttätige Arbeitsweise und benötigt die dem Stand der Technik entsprechende fahrbare Maschine.

Die US-A 4735 188 zeigt eine Seilsägemaschine, die auf dem bekannten Schlitten- oder Wagenprinzip beruht. Der Schlitten wird dabei nach dem Stand der Technik in Schienen geführt und über ein System Zahnstange/Ritzel oder Gewindstange/Schnecke angetrieben. Dadurch wird einerseits der notwendige Schnittvorschub erzeugt, aber andererseits ergibt sich dadurch eine träge, oft selbsthemmende Verbindung zwischen Schlittenantriebs- bzw. Vorschubmotor und dem am Untergrund fixierten Untergestell der Seilsägemaschine mit Flankenspiel zwischen den einzelnen Getriebeelementen.

Die US-A 4735 188 stellt daher auf federnde Elemente in der Maschine ab, um die betriebsbedingten Ungleichmäßigkeiten wie Längenänderungen und Kraftspitzen im Sägeseil, herrührend von dem trägen, oft selbsthemmenden mechanischen Antrieb, auszugleichen. Trotzdem zeigte sich in der Praxis, daß solche Maschinen nach dem Stand der Technik kein gleichmäßiges Halten und reproduzierendes Einstellen der Seilzugkraft erlauben und Seilrisse dadurch sehr häufig vorkommen. Eine weiche Anpassung und gleichmäßige Haltung der Seilzugkraft kann nach diesen Ausführungsbeispielen nicht eingestellt und ausgeregelt werden, was zu Aufschaukelungen im Gesamtsystem mit Seilrissen führen kann.

Ein weiterer Nachteil der Seilsägemaschinen nach dem Stand der Technik sind die ölhydraulischen Seilzugmotoren. Diese Antriebe zeigen den Vorteil einer gewissen Regelbarkeit, aber den Nachteil der Gefahr von Verschmutzungen der Werkstücke und des schlechten Gesamtwirkungsgrades des Systems Hydromotor-Schläuche-Hydraulikaggregat. Die Hochdruckschläuche bedingen darüber hinaus eine Er schwernis für das Bedienungspersonal.

Ziel der Erfindung ist es daher, eine hochmobile und kompakte Seilsägemaschine zu schaffen, die die Nachteile der Wandsägemaschinen und der Seilsägemaschinen nach dem Stand der Technik beseitigt und die vorteilhafte energie- und zeitsparende Zerspanungsweise des Diamantsägeseils in einem optimierten Gesamtsystem besonders fördert, wodurch die Anwendungsgrenze des Seilsägeverfahrensbesonders im Bereich des Hoch- und Tiefbaues erweitert werden soll.Im Besonderen ist das Ziel der erhöhten Mobilität der erfindungsgemäßen Seilsägemaschine die verbesserte Transportfähigkeit der Anlage, die raschere Herbeiführung der Sägebereitschaft, die Erreichung von räumlich schwierig angeordneten Trennstellen an einer Bau- oder Abbaustelle mit dem Sägeseil und die Möglichkeit, aus nur einer Aufstellung und Befestigung der Maschine mehrere räumlich verteilte Schritte durchführen zu können.

Ein weiteres Ziel der Erfindung ist die Schaffung einer kompakten Seilsägemaschine durch die Unterbringung einer großen Seillänge bei möglichst geringem Platzbedarf der Applikation und durch die Unterbringung der notwendigen Seilführungs-, Seilspann- und Seilumlenkungselemente innerhalb der Maschine, sodaß zusätzliche Vorrichtungen möglichst überflüssig werden.

Ein weiteres Ziel der Erfindung ist die Erreichung geringsten Bedienungsaufwandes und höchster Betriebssicherheit im Betrieb der Seilsägemaschine insbesondere gegenüber Seilrissen bei gesteigerter Schneidleistung und gesteigerter Werkzeugausnützung.

Erfindungsgemäß werden diese Ziele durch eine Seilsägemaschine gemäß Anspruch 1 erreicht. Vorteilhafte Weiterbildungen der Erfindung sind in den davon abhängigen Unteransprüchen enthalten.

Die Erfindung wird anhand der folgend zusammengefaßten Abbildungen der Zeichnung beschrieben. Es zeigen

Figur 1     eine erfindungsgemäße Seilsägemaschine in Vorderansicht,

Figur 2     eine erfindungsgemäßen Seilsägemaschine in Draufsicht,

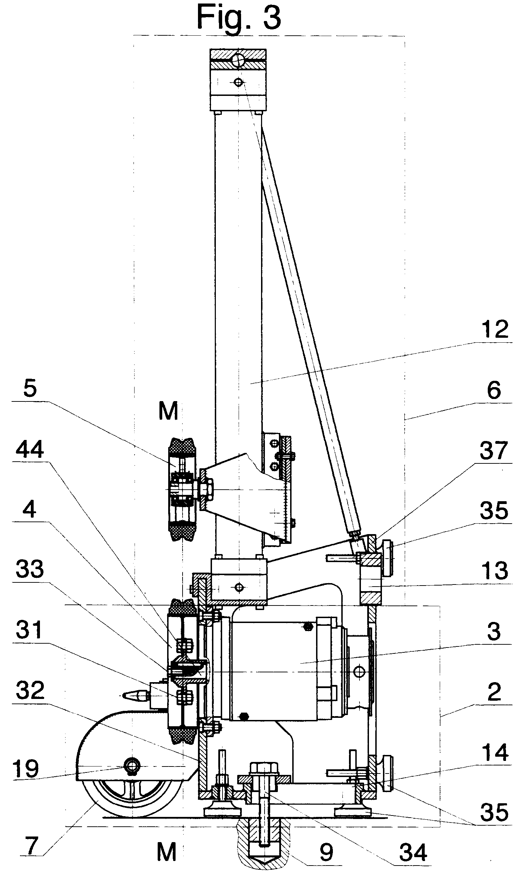

Figur 3     eine erfindungsgemäße Seilsägemaschine in Seitenansicht,

Figur 4     eine erfindungsgemäße Seilsägemaschine in Vorderansicht mit der Vorschubeinheit (6) in der Endposition und mit den Schwenkvorrichtungen (15) für seitliche Seilführung in Schwenkposition,

Figur 5     eine Schwenkvorrichtung (15) in Seitenansicht,

Figur 6     eine Schwenkvorrichtung (15) in Schnittdarstellung

Figur 7     eine erfindungsgemäße Seilsägemaschine in Vorderansicht mit 2 Vorschubzylindern,

Figur 8     eine erfindungsgemäße Seilsägemaschine mit schwenkbaren Verlängerungsarmen (26),

Figur 9     eine erfindungsgemäße Seilsägemaschine in liegender Arbeitsweise mit Anbaurollenbock (42) und schwenkbaren Seilspeicherarmen (43),

Figur 10    die Seilführung bei Seilsägemaschinen nach dem Stand der Technik gemäß EP 0317965 A 2,

Figur 11    die Seilführung in einem erfindungsgemäßen Ausführungsbeispiel mit zweifacher Vorschubwegverkürzung,

Figur 12    die Seilführung in einem erfindungsgemäßen Ausführungsbeispiel mit vierfacher Vorschubwegverkürzung,

Figur 13    schematisch den Schnittverlauf einer erfindungsgemäßen Seilsägemaschine in liegender Arbeitsweise,

Figur 14    die Seilanlageverhältnisse während des Schnittverlaufes einer erfindungsgemäßen Seilsägemaschine,

Figur 15    die Seileingriffsverhältnisse gegen Schnittende bei einer erfindungsgemäßen Seilsägemaschinen,

Figur 16    die Seilzugkraft und den Seilwinkel gegen Schnittende einer erfindungsgemäßen Seilsägemaschine,

Figur 17    eine erfindungsgemäße Seilsägemaschine in liegender Arbeitslage bei einem Schrägschnitt,

Figur 18    das Regelungsprinzip einer erfindungsgemäßen Seilsägemaschine.

Die Seilsägemaschine besteht aus zwei trennbaren Baugruppen, dem Maschinengrundkörper (2) und der Vorschubeinheit (6), wodurch zwei Einheiten mit etwa gleichen Gewichten und räumlichen Ausmaßen für Transporte und Manipulationen am Einsatzort geschaffen werden. Die Schnittsteile zwischen Grundkörper (2) und Vorschubeinheit (6) bilden vier Verbindungsbolzen (30).

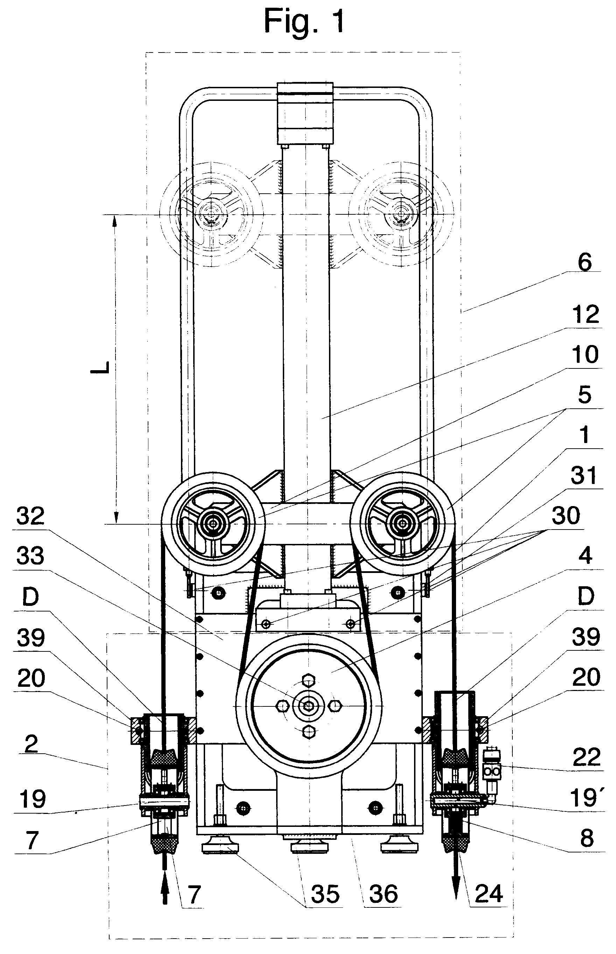

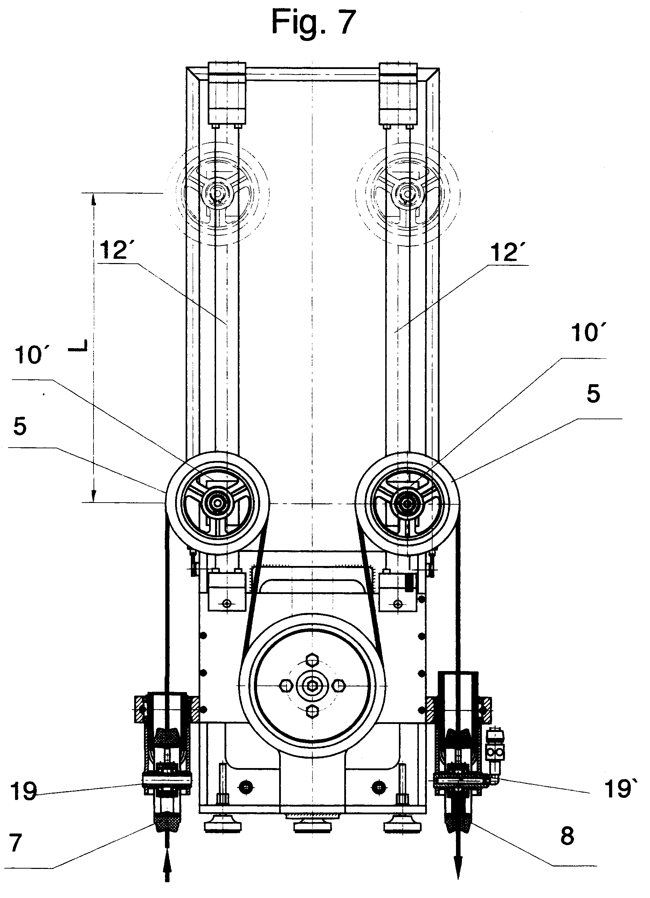

Der Maschinengrundkörper (2) ist bevorzugt in Schraub-/Schweißkonstruktion erstellt gemäß einem Ausführungsbeispiel wie in den Figuren 1, 2 und 8 dargestellt. In diesem Ausführungsbeispiel der Erfindung ist die Vorschubeinheit (6) mit einem Vorschubzylinder (12) ausgeführt, während im Ausführungsbeispiel nach Figur 7 für das einlaufseitige und das auslaufseitige Sägeseiltrum je ein eigener Vorschubzylinder (12') vorgesehen ist.

In der Frontplatte (32) des Maschinengrundkörpers (2) fest angeflanscht mit den Schrauben (31) befindet sich ein Seilzugmotor (3) auf der Innenseite des Grundkörpers (2) und eine direkt am durch eine Bohrung der Frontplatte (32) ragenden Wellenstummel (44) des Motors (3) befestigte Sägeseilantriebsrolle (4) auf der Außenseite der Frontplatte (32).

Der Seilzugmotor (3) ist erfindungsgemäß als wassergekühlter Drehstrommotor ausgeführt, was hohe Leistungsausbeute bei geringem Gewicht ermöglicht. Es treten keine Verluste durch Umwandlung der elektrischen Motorleistung entsprechend dem Stand der Technik in hydraulische Druckenergie, durch Ölleitungsverluste und durch Umwandlung der hydraulischen Druckenergie in die Sägeseilbewegung in einem Hydromotor auf.

Dadurch wird gegenüber hydraulischen Antriebssystemen von Seilsägemaschinen nach dem Stand der Technik bei vergleichbarer Größenordnung die Nennleistung auf 25 - 40 % reduziert.

In der Praxis hat sich gezeigt, daß der Vorteil der Regelbarkeit von hydraulischen Antriebssystemen für Seilsägemaschinen hauptsächlich nur in der Anlaufphase ausgenützt wird. Danach wird versucht, mit möglichst hoher und konstanter Schnittleistung beziehungsweise Schnittgeschwindigkeit zu fahren. Schneidversuche mit einer erfindungsgemäßen Seilsägemaschine führten zu der überraschenden Erkenntnis, daß die Seilantriebserfordernisse nicht in einer hohen Regelbarkeit des Antriebsmotors liegen, sondern im Gegenteil ist das relativ starre Drehzahlverhalten etwa eines Drehstromasynchronmotors für einen störungsfreien Dauerbetrieb die günstigere Lösung. Anwendungsfallbedingte Regelvorgänge sollen nach dieser Erkenntnis vom Seilantriebsystem in das Vorschub- und Spannsystem der Maschine verlagert werden, das erfindungsgemäß durch die pneumatisch betriebene Vorschubeinheit (6) gebildet wird.

Gelegentlich erwünschte Änderungen der Sägeseilschnittgeschwindigkeit werden dabei durch Austausch von Seilantriebsrollen (4) verschiedenen Durchmessers herbeigeführt. Die zentrale Befestigungsschraube (33) dient dabei als schnell lösbare Verbindung zwischen Wellenstummel (44) des Seilzugmotors (3) und der Seilantriebsrolle (4).

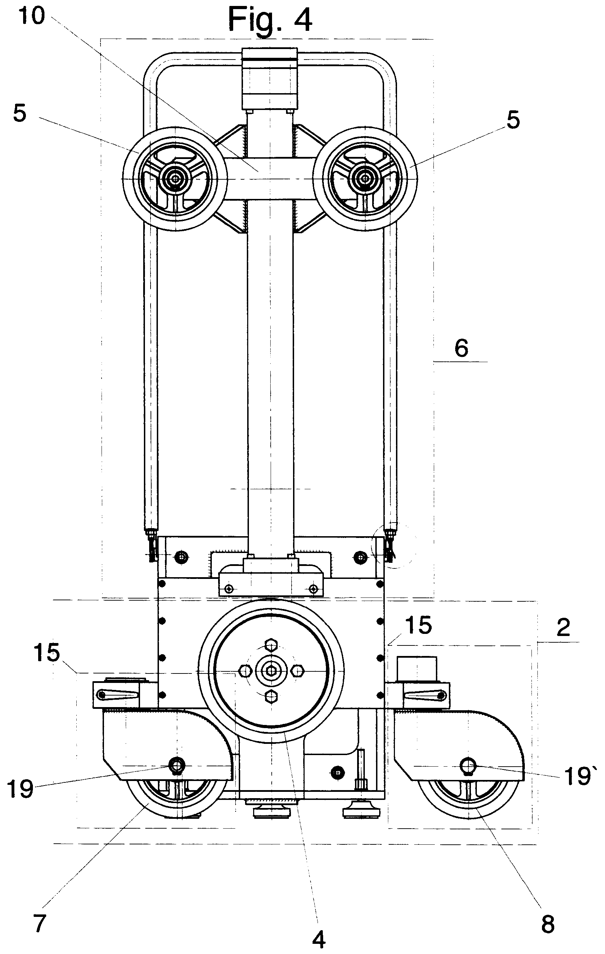

Die Vorschubeinheit (6) wird erfindungsgemäß innerhalb der Maschine untergebracht und pneumatisch durch mindestens einen Pneumatikzylinder betätigt. Dabei kommt nach den Figuren 1, 2 und 4 und 8 ein gemeinsamer Zylinder (12) und nach Figur 7 für das einlaufseitige und das auslaufseitige Sägeseiltrum je ein gesonderter Pneumatikzylinder (12') zum Einsatz. Die Hauptaufgabe des pneumatischen Vorschubelementes ist sowohl die Erzeugung und Konstanthaltung der Seilspannung für das Sägeseil, als auch die Zurücklegung des werkstückbedingten Vorschubweges (A) über den Kolbenweg (L). Zusätzlich zum Vorschubweg (A) können sich im praktischen Betrieb weitere aufzunehmende Wegstrecken ergeben. Somit ist mindestens ein Vorschubelement (12) in einer Ausführungsform gemäß den Figuren 1,2,4 und 8 zur Betätigung eines gemeinsamen Querhauptes (10) für die einlaufseitigen und die auslaufseitigen Spannrollen (5) vorgesehen. Mindestens je ein Vorschubelement (12`) ist in einer weiteren Ausführungsform der Erfindung nach Fi gur 7 vorgesehen, für die getrennte Betätigung je eines Querhauptes (10`) für die Seileinlaufseite und für die Seilauslaufseite.

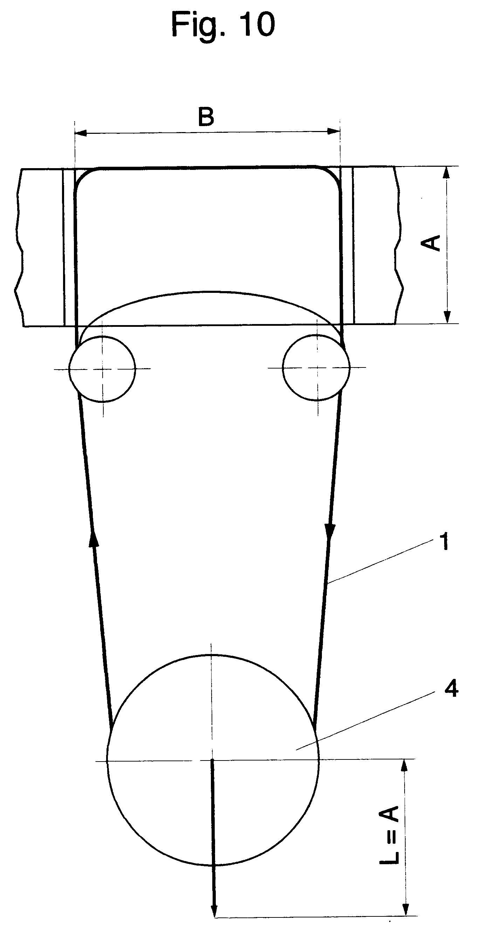

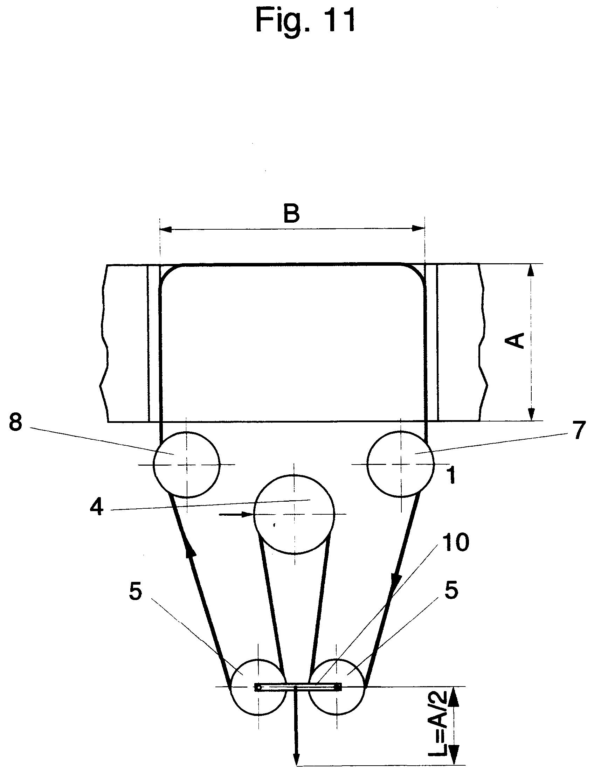

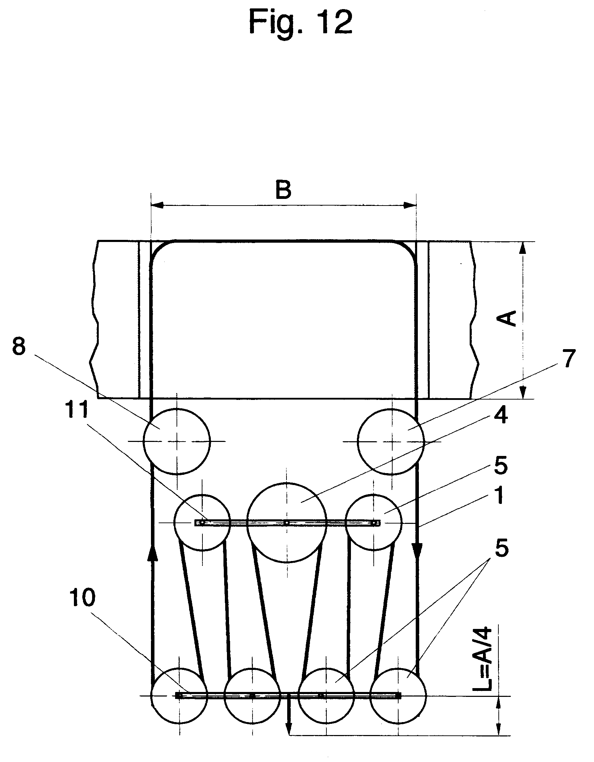

Erfindungsgemäß besteht die in die Maschine integrierte Vorschubeinheit (6) aus einem Seilwegverkürzungssystem nach dem Flaschenzugprinzip. Dabei wird das Sägeseil (1) gemäß Figur 11 und Figur 12 so durch die fest mit dem Maschinengrundkörper 2 und die beweglich mit dem Kolben des pneumatischen Zylinders (12), bzw. den Zylindern (12') verbundenen Seilspannrollen (5) und die Seilantriebsrolle (4) geführt, daß ein Übersetzungsverhältnis (L) zu (A) von 1 zu 2 bis 1 zu 8 erreicht wird. Figur 10 zeigt nach dem Stand der Technik ein Übersetzungsverhältnis von 1:1. Figur 11 zeigt schematisch ein Ausführungsbeispiel mit einem erfindungsgemäßen Übersetzungsverhältnis von 1:2 und Figur 12 ein Ausführungsbeispiel mit einem erfindungsgemäßen Übersetzungsverhältnis von 1:4. Es können erfindungsgemäß auch höhere Übersetzungsverhältnisse entsprechend dem Flaschenzugprinzip durch Anordung der entsprechend höheren Anzahl von Spannrollen (5) erreicht werden. Dabei muß nur die Gesamtzahl der verschiebbaren Rollen am Querhaupt (10) bzw. an den verschiebbaren geteilten Querhäuptern (10') um 1 höher sein als die Zahl der festen Rollen am Maschinengrundkörper (2), wobei entsprechend dem Flaschenzugprinzip die Seilantriebsrolle (4) als feste Rolle mitzuzählen ist.

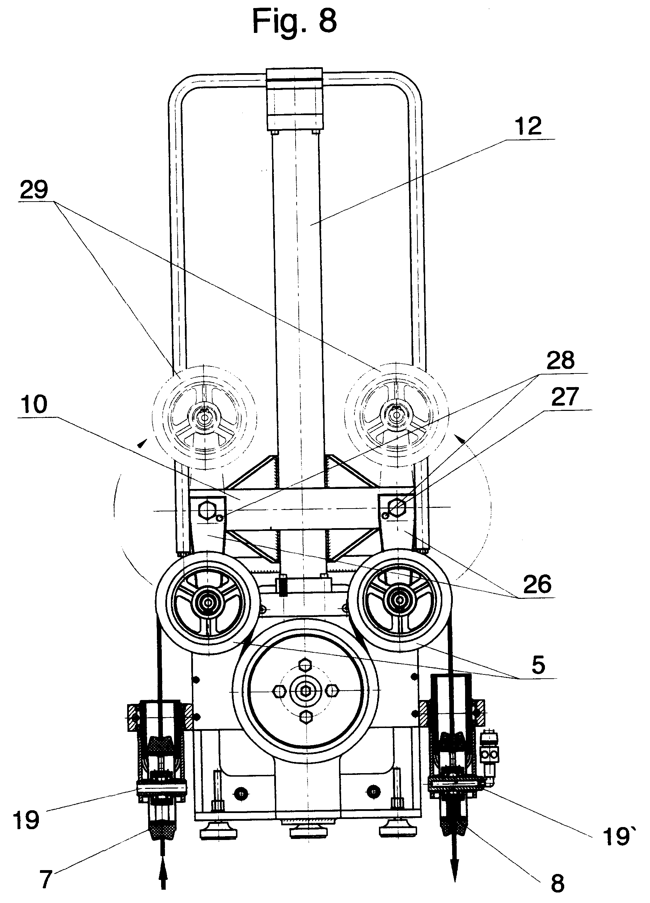

Eine weitere Ausgestaltung des Erfindungsgedankens der Seilwegverkürzung innerhalb der Seilsägemaschine wird in Figur 8 beschrieben. Dabei ist je ein Verlängerungsarm (26) für das einlaufseitige und das auslaufseitige Sägeseiltrum mit seinem einen Ende um den Gelenkbolzen (27) drehbar mit dem Querhaupt (10) des pneumatischen Vorschubzylinders (12) beziehungsweise bei 2 Vorschubzylindern (12') wie in Figur 7 dargestellt, verbunden.

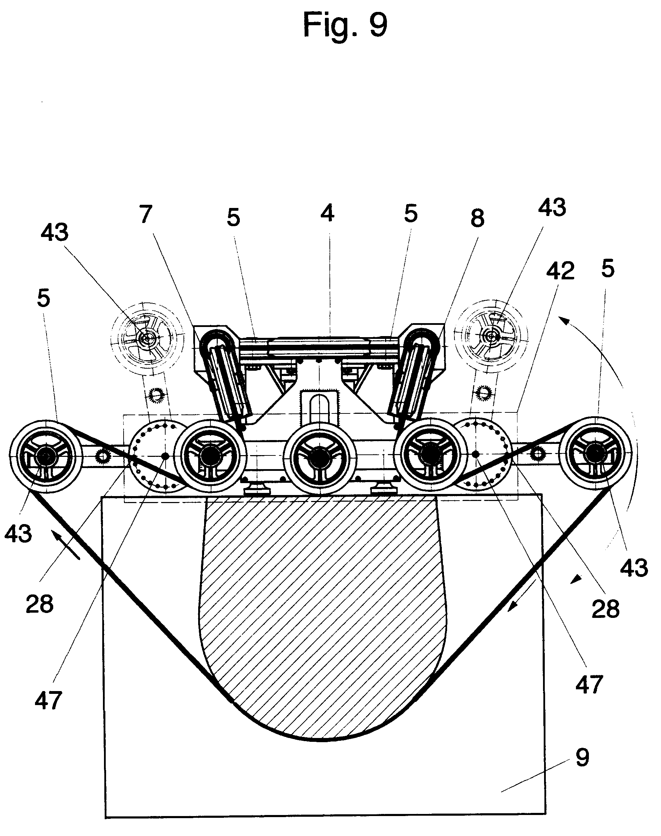

An seinem anderen Ende trägt jeder Verlängerungsarm (26) mindestens eine drehbar gelagerte Seilspannrolle (5). Die Verlängerungsarme (26) sind zwischen der Seilverkürzungsposition und der Seilverlängerungsposition um die Gelenkbolzen (27) um 180 ° schwenkbar. Dadurch wird eine zusätzliche Speichermöglichkeit innerhalb der Seilsägemaschine für im Schnittverlauf gegen Ende des Schnittes freiwerdende werkstückbezogene Teillängen der geschlossenen Seilsägenschlinge geschaffen. Ein weiterer Erfindungsgedanke der Seilwegverkürzung wird wie in Figur 9 beschrieben durch das Anbringen eines Anbaurollenbockes (42) mit schwenkbaren Seilspeicherarmen (43) erreicht durch das Anbringen verschiedenlanger Seilspeicherarme (43) und das Verstellen der Arme um die Achse über einen Bereich von maximal 260 ° ist es möglich, die zu speichernde Seillänge sowie die Seileintrittswie auch die Austrittsposition zu justieren. Dieser Anbaurollenbock mit Anbauarmen kann auch separat als Rollanbock vor die Schnittstelle als auch Anbausatz bei anderen Maschinen verwendet werden.

Mit der erfindungsgemäßen Ausführungsform der Vorschubeinheit (6) wird zusätzlich die Unabhängigkeit der Seilsägemaschine von einem Schienensystem erreicht, in dem nach dem Stand der Technik die Seilsägemaschinen als Schlitten oder Wagen geführt werden, wobei meist ein Hydraulikzylinder oder ein hydromechanischer Antrieb den Vorschub erzeugt. Eine erfindungsgemäße Seilsägemaschine kann dadurch direkt am Werkstück oder in der Nähe von einem oder mehreren durchzuführenden Schnitten befestigt werden, wobei die Vorschub- und Spannbewegungen innerhalb der Maschine erfolgen.

Dadurch ergeben sich aufgrund der geringen zu bewegenden Massen gegenüber von Seilsägemaschinen nach dem Stand der Technik sehr wirksame Verbesserungen der Regelbarkeit der Seilzugkraft (S) und die Seilwerkzeuge (1) werden geschont bei höherer möglicher Belastung beziehungsweise bei gesteigerter Zerspanungsleistung.

Seilrisse durch die Grobheit der Regelung von beispielsweise schienengeführten hydromechanischen Zahnstange/Ritzel-Antrieben werden somit unterbunden.

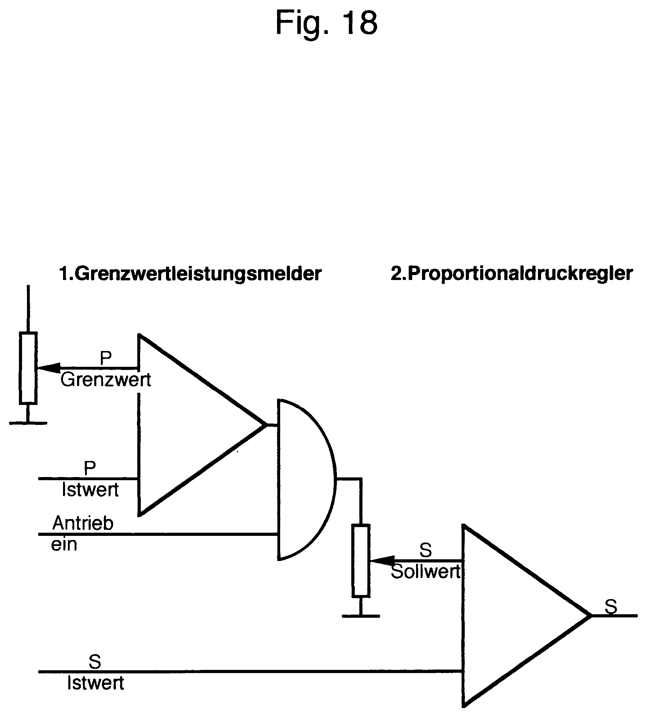

Figur 18 zeigt schematisch das in den erfindungsgemäßen Aufführungsbeispielen verwendete Regelungsprinzip für die vom Seilspann - und Vorschubzylinder (12, 12') aufzubringende Sägeseilzugkraft (S). Wenn dabei als Voraussetzung der Schalter für den Antrieb eingeschaltet ist, folgt die Kraftregelung dem Grundprinzip: Wenn die Ist-Leistung (P) des Seilzugmotors (3) kleiner wird als der vorgewählte Grenzwert der Leistung, dann wird der Sollwert der Seilzugkraft (S) aktiviert.

Der Regler nach Figur 18 ist Bestandteil der Sägeseilspann- und Vorschubeinheit (6) und ist abgestimmt auf die vorteilhaften Eigenschaften der im System angewen deten Druckluft als Fluidmedium. Diese Eigenschaften sind die Federungseigenschaften beziehungsweise Kompressibilität, die geringe Zähigkeit und das geringe Gewicht des Fluidmediums Luft. Diese Eigenschaftskombination wird dabei besonders vorteilhaft für das erfindungsgemäße Seilsägeverfahren ausgenützt.

Versuchseinsätze einer erfindungsgemäßen Seilsägemaschine zeigten demnach völlig gleichmäßige, gedämpfte Vorschubbewegung während der gesamten Schnittdauer ohne Bedarf nach bisher üblicher ständiger Überwachung des Betriebszustandes durch das Bedienungspersonal. Besonders die in hydromechanisch angetriebenen Seilsägemaschinen nach dem Schlittenprinzip auftretenden, gefürchteten Spannungsspitzen mit der Gefahr von Seilrissen unterblieben vollkommen.

Verursacht wird das gefundene vorteilhafte Verhalten der pneumatischen Vorschubeinheit (6) zusätzlich durch das geringe Gewicht der beweglichen Teile der Vorschubeinheit (6), wodurch eine hohe Beweglichkeit im Zusammenwirken mit der Seilzugregelung nach Figur 18 erreicht wird. Die so erreichte hohe Reaktionsfähigkeit der Vorschubeinheit (6) wirkt sich günstig auf die Sicherheit gegen Unfälle und auf die Bedienbarkeit der Maschine aus. Mit der erfindungsgemäßen Seilsägemaschine wird Mehrmaschinenbedienung durch das Personal ermöglicht.

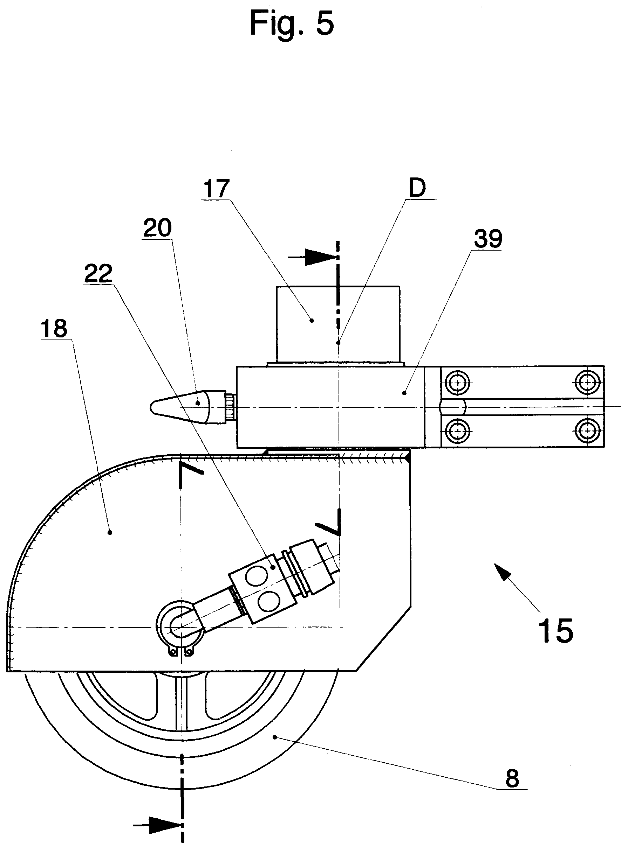

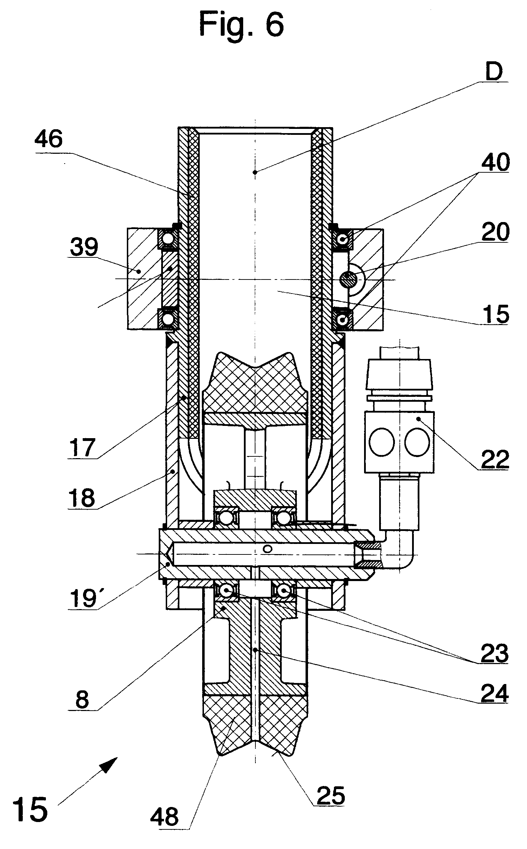

Eine vorteilhafte Ausgestaltung der erfindungsgemäßen Seilsägemaschine bezüglich der Spülwasserzufuhr zeigt die Figur 5 und die Figur 6. Eine Schwenkvorrichtung (15) des bezüglich der Maschine auslaufseitigen Sägeseiltrums ist mit einer zusätzlich als Spülwasserzuführapparat ausgestalteten Schwenkrolle (8) bestückt. Das Spülwasser wird über eine handelsübliche Schlauchschnellkupplung (22) in die hohlgebohrte Achse (19') und weiter über Bohrungen (24) im Rollenkörper der Schwenkrolle (8) direkt in das Seillaufprofil (25) der Schwenkrolle (8) geleitet. Bevorzugt wird dabei das aus dem Kühlkreislauf des wassergekühlten Drehstrommotors (3) austretende Kühlwasser als Spülwasser für das Sägeseil (1) weiterverwendet. Der Erfindungsgedanke stützt sich dabei auf Versuchsergebnisse, wonach selbst relativ große herkömmlich zugeführte Wassermengen durch die damit meist verbundene notwendige hohe Zufuhrgeschwindigkeit beziehungsweise durch die besonders hohe Relativgeschwindigkeit zwischen Strahlgeschwindigkeit und Sägeseilgeschwindigkeit relativ wirkungsarm bleiben durch Strahlablenkung. Es hat sich dagegen gezeigt, daß die zwangsläufige Aufbringung des Spülwassers auf das Sägeseil (1) mit der Umfangsgeschwindigkeit der Schwenkrolle (8) zum Mitziehen des Spülwassers in den Sägespalt des Werkstücks (9) führt und damit eine Verbesserung der Spülwirkung erzielt werden kann.

Die erfindungsgemäße Seilsägemaschine ist sowohl stehend als auch in Rückenlage einsetzbar durch Verschraubung mit einer oder mehreren Dübelschrauben (34) oder dergleichen mit dem Werkstück (9) bzw. dem Untergrund, wobei die Schraube (34) durch das Langloch (14) für stehende Arbeitsweise und durch das Langloch (13) für liegende Arbeitsweise ragt. Zur Feineinstellung der genauen Arbeitslage befinden sich sowohl in der Bodenplatte (36) als auch in der Rückenplatte (37) des Maschinengrundkörpers (2) drei Fußschrauben (35) für stehende und vier Fußschrauben (35) für liegende Arbeitslage, die mit Kontermuttern sicherbar sind. Die gegensinnige Verspannung von Dübelschrauben (34) und Fußschrauben (35) in der Rückenplatte (37) beziehungsweise Bodenplatte (36) gegenüber dem Werkstück 9 ermöglicht die einfache, schnelle und betriebssichere Fixierung der gesamten Seilsägemaschine.

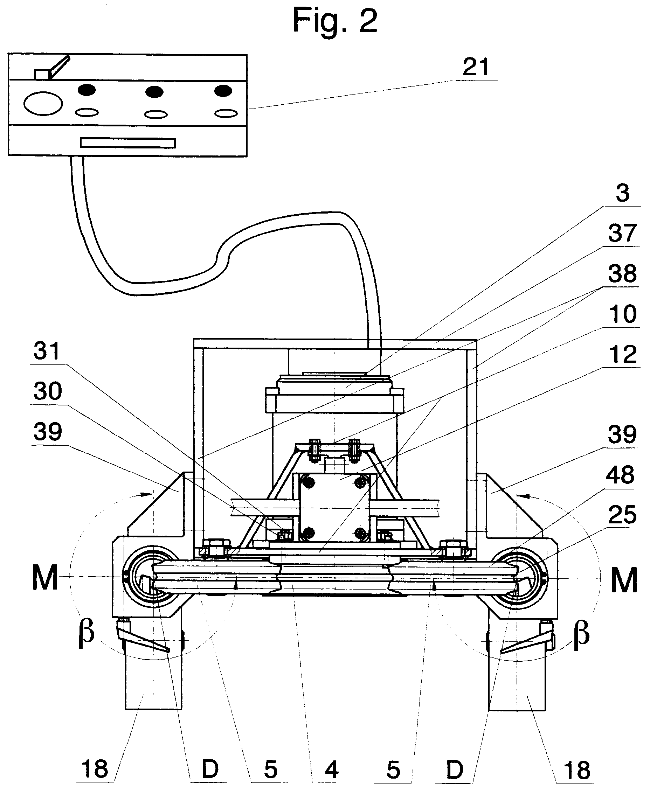

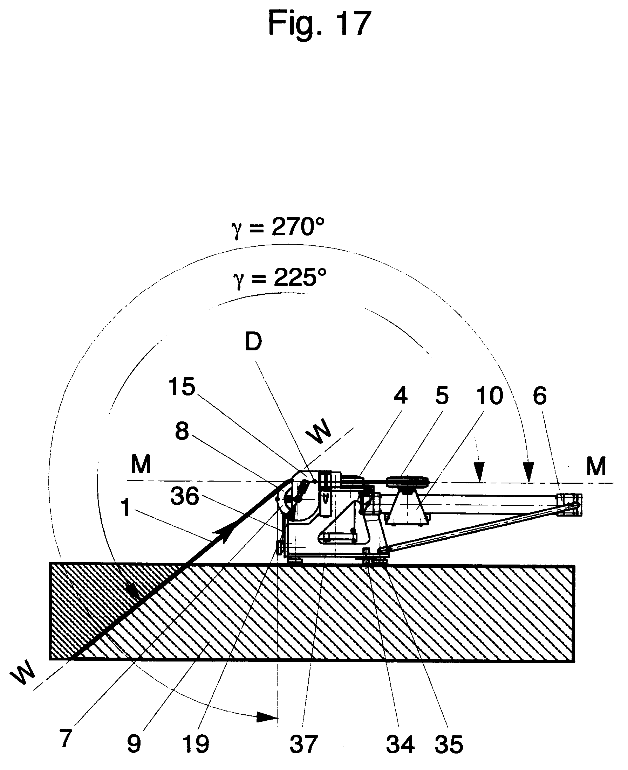

Figur 17 zeigt eine Anwendungsskizze einer erfindungsgemäßen Seilsägemaschine bei liegendem Einsatz und Durchführung eines Schrägschnittbeispiels unter einem Winkel $\gamma = 225°$, der gebildet wird zwischen der Schnittebene (W) der Seilschlinge (1) im Werkstück (9) und der Maschinenebene M der Seilschlinge (1) beim Durchlaufen der Seilspannrollen (5) und der Seilantriebsrolle (4). Die Figur 17 zeigt den Winkelbereich $\gamma$ von 0° bis etwa 270°, in dem die Schnittebene (W) gewählt werden kann. Bevorzugt durchführbar, aber zeichnerisch nicht dargestellt, sind mit der erfindungsgemäßen Seilsägemaschine in Rückenlage genauso wie in stehender Arbeitslage Bündigschnitte nach unten, Winkelschnitte nach unten, Bündigschnitte waagrecht, Winkelschnitte nach oben und Bündigschnitte nach oben durch Einstellung des Schwenkwinkels ($\beta$ - siehe Figur 2) der Schwenkrollen (7, 8) und gegebenenfalls unter Feststellung des gewählten oder selbstangepaßten Schwenkwinkels ($\beta$) mit der Klemmvorrichtung (20) der Schwenkvorrichtung (15). Je eine Schwenkvorrichtung (15) ist für das einlaufseitige und auslaufseitige Sägeseiltrum vorgesehen. Die Figur 6 zeigt eine Schwenkvorrichtung (15) in Schnittdarstellung, wobei die Schwenkrolle (8) bevorzugt zusätzlich als Spülwasserzuführapparat ausgeführt ist. Die Figur 5 zeigt eine Schwenkvorrichtung (15) in Seitenansicht. Gemäß dem Ziel der

EP 0 738 194 B1

Erfindung werden die Schwenkvorrichtungen (15) an den oberen Kanten des Maschinengrundkörpers (2), gebildet aus Frontplatte (32) und jeweiliger Seitenplatte (38), mit Hilfe eines Trägerkörpers (39) derart befestigt, daß ein freier Schwenkwinkel β = 270 ° um die geometrische Achse (D) ermöglicht wird. Die Schwenkachse (D) mit dem Schwenkwinkel (β) ist aus zweierlei Gründen vorgesehen.

Zum einen kreuzen die geometrischen Achsen (D) die geometrische Schnittlinie der Seillaufebenen W und M um 90 °, wodurch zur oben erwähnten höheneinstellbaren Schnittführung eine zusätzliche seitliche Schnittführung ermöglicht wird, wenn beide Schwenkvorrichtungen parallel in die gewünschte seitliche Richtung geschwenkt werden.

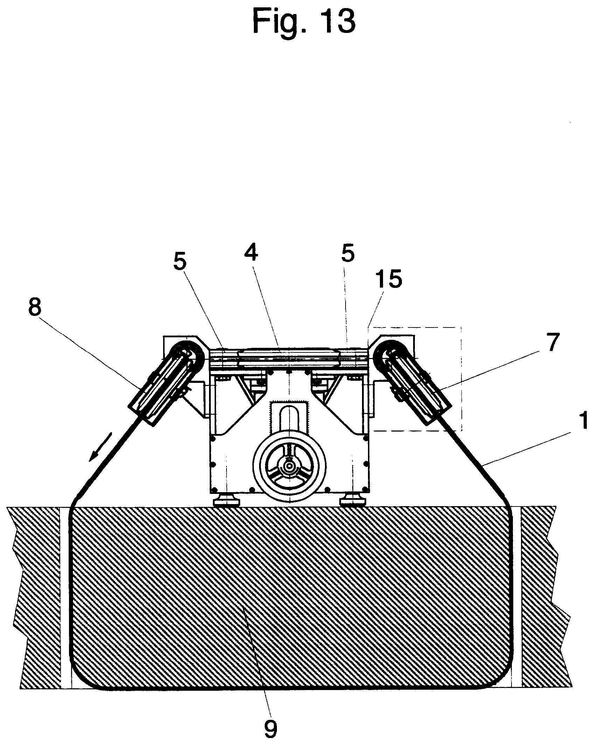

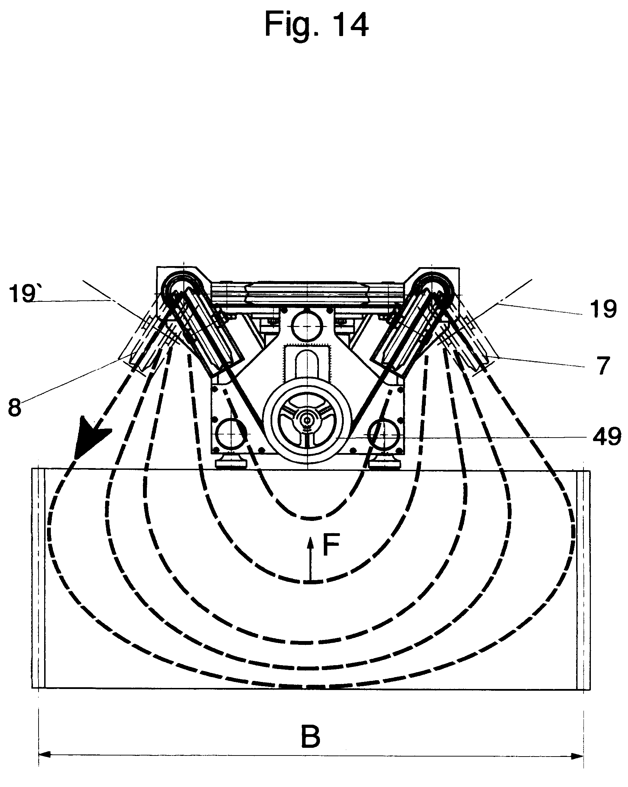

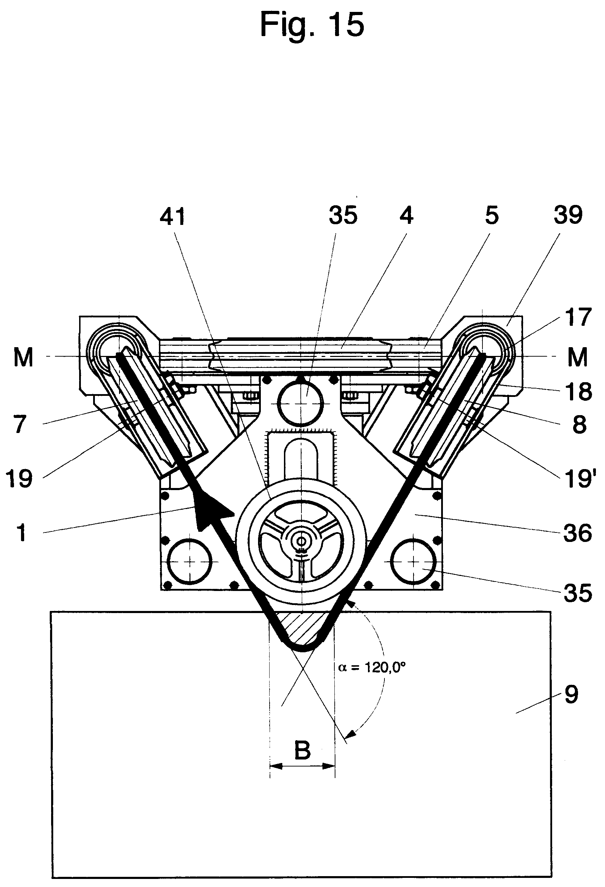

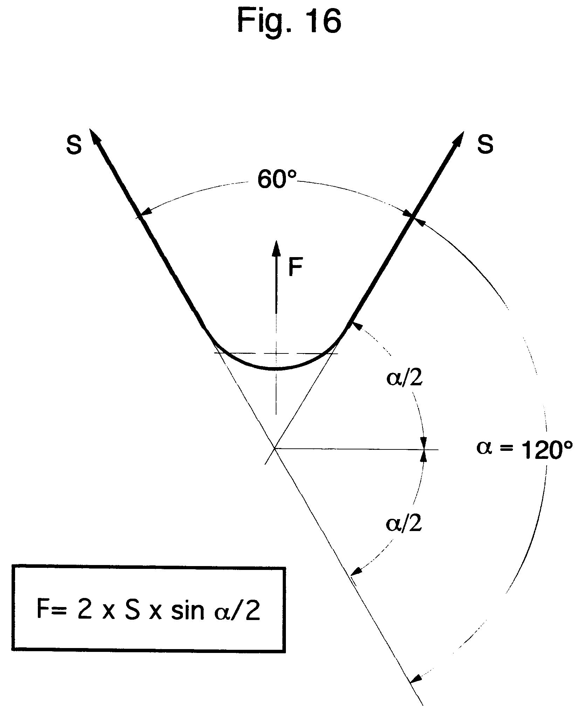

Zum anderen werden die Schwenkvorrichtungen (15) zur Optimierung des Seilwinkels α im Schnittverlauf und zur Anpassung an den Seildurchführungsabstand (B) des Werkstückes (9) durch gegensinniges Ein- beziehungsweise Ausschwenken herangezogen. Die Figuren 13, 14, 15 und 16 zeigen die Anlageverhältnisse des Sägeseils während des Schnittverlaufs. Die Schwenkvorrichtungen (15) ermöglichen dabei, daß eine bestimmte Schnittvorschubkraft (F) nicht unterschritten wird, weil der Seilwinkel α nicht kleiner als 120 ° wird und sich entsprechend der Beziehung F = 2 x S x sin α/2 bis zum Schnittende höhere Schnittvorschubkraft als bei Seilsägemaschinen nach dem Stand der Technik ergibt gemäß Tabelle 1.

## Tabelle 1

| ° $\alpha$ | arc $\alpha$ | sin $\alpha$ | $F = 2 \times S \times \sin(\alpha/2)$ | Verlust an F [%] | Restzugkraft [%] |
|---|---|---|---|---|---|
| 180 | 3,14 | 0,00 | 2,00 | 0 % | 100 % |
| 120 | 2,09 | 0,87 | 1,73 | -13 % | 87 % |
| 90 | 1,57 | 1,00 | 1,41 | -29 % | 71 % |
| 45 | 0,79 | 0,71 | 0,77 | -62 % | 38 % |
| 30 | 0,52 | 0,50 | 0,52 | -74 % | 26 % |
| 22 | 0,38 | 0,37 | 0,38 | -81 % | 19 % |

Die neue Maschine verliert in der ungünstigsten Schneidstellung nur 13 % der maximalen Schneidzugkraft, während herkömmliche Maschinen mit Endwinkeln von α = ca. 22 ° meist auf rund 20 % der anfänglichen Schneidzugkraft abfallen. Das heißt, für eine vergleichbare Schneidzugkraft muß der Seilzug 3,3 x so hoch sein im Vergleich zur beschriebenen neuen Maschine. Es kommt noch dazu, daß die Kontraktlänge des Diamantseiles in der Endphase des Schnittes wesentlich länger ausfällt als bei der neuen Maschine.

Die erfindungsgemäße Seilsägemaschine ist so konstruiert, daß die Baugruppen Vorschubeinheit (6) und Maschinengrundkörper (2) im montierten Zustand in der Nähe oder auf der zu bearbeitenden Schnittstelle des Werkstücks (9) in Stellung gebracht wird, wobei im Normalfall keine weiteren zusätzlichen Rollenführungsgestelle benötigt werden. Erfindungsgemäß sind alle Rollen (4), (5), (7), (8) in der Maschine entsprechend ihrer Funktion untergebracht. Die Rollen bestehen aus handelsüblichen Schwerlasträdern, die in an sich bekannter Weise durch Drehen oder Schleifen für den erfindungsgemäßen Zweck in ihrem Seillaufprofil (25) profiliert werden.

LISTE DER VERWENDETEN BEZUGSZEICHEN UND FORMELZEICHEN

(1) Sägeseil

(2) Maschinengrundkörper

(3) Seilzugmotor

(4) Seilantriebsrolle

(5) Seilspannrolle

(6) Vorschubeinheit

(7) Schwenkrolle einlaufseitig in bezug auf die Seilsägemaschine

(8) Schwenkrolle auslaufseitig in bezug auf die Seilsägemaschine mit Spülwas serzufuhr

(9) Werkstück

(10) Querhaupt der Vorschubeinheit (6) gemeinsam

(10') Querhaupt der Vorschubeinheit (6) geteilt

(11) Querhaupt am Maschinengrundkörper (2) befestigt

(12) Pneumatischer Vorschubzylinder bei gemeinsamem Querhaupt (10)

(12') Pneumatischer Vorschubzylinder bei geteiltem Querhaupt (10')

(13) Langloch zur Befestigung der Seilzugmaschine liegend

(14) Langloch zur Befestigung der Seilzugmaschine stehend

(15) Schwenkvorrichtung

(17) Stützrohr

(18) Gehäuseteil der Schwenkvorrichtung (15)

(19) Achse der Schwenkrolle (7)

(19') Achse der Schwenkrolle (8)

(20) Klemmvorrichtung

(21) Schaltkasten

(22) Schlauchschnellkupplung der Spülwasserzufuhr

(23) Wälzlager der Schwenkrollenachse (19')

(24) Spülwasserbohrung

(25) Seillaufprofil

(26) Verlängerungsarm

(27) Gelenkbolzen

(28) Fixierbolzen für Verlängerungsarm (26)

(29) Seilverkürzungsposition

(30) Verbindungsbolzen

(31) Flanschschrauben des Seilzugmotors

(32) Frontplatte des Maschinengrundkörpers (2)

(33) Zentrale Befestigungsschraube

(34) Dübelschraube

(35) Fußschraube

(36) Bodenplatte

(37) Rückenplatte

(38) Seitenplatte

(39) Trägerkörper

(40) Schwenklager

(41) Seilfangrolle

(42) Anbaurollenbock

(43) Verlängerungsarm

(44) Wellenstummel

(46) Schutzauskleidung des Stützrohrs (17)

(47) Gelenk

(48) Rollenbelag

(49) Seilfangrolle

$\alpha$ Seilwinkel

$\beta$ Schwenkwinkel der Schwenkvorrichtung (15)

$\gamma$ Schwenkwinkel zwischen den Seillaufebenen (M) und (W)

A Werkstückbezogene Wegstrecke (Vorschubweg)

B Seildurchführungsabstand bzw. Werkstückbreite

D Schwenkachse der Schwenkvorrichtung (15)

F Schnittvorschubkraft

L Kolbenhubweg des Pneumatikzylinders (12)

M Seillaufebene in der Maschine, gebildet durch Profilmitte Seilantriebsrolle (4) und Profilmitte Seilspannrollen (5)

S Sägeseilzugkraft

W Seillaufebene im Werkstück (9), gebildet durch die geschlossene Schlaufe des Sägeseils (1)

**Patentansprüche**

1. Seilsägemaschine zum Sägen von Beton, Mauerwerk, Naturstein und dergleichen mit einem mit diamanthaltigen Schneidperlen bestückten Sägeseil (1) bestehend aus einem Maschinenteile tragenden Grundkörper (2), einem Seilzugmotor (3), der über eine Seilantriebsrolle (4) eine geschlossene Sägeseilschleife (1) antreibt, einer Vorschubeinheit (6), je einer Schwenkrolle (7,8) zur Führung des einlaufenden und des auslaufenden Sägeseiltrums und einem über eine Steuerleitung mit der Seilsägemaschine verbundenen Steuerkasten (21), gekennzeichnet durch folgende Merkmale:

a) die Seilsägemaschine ist sowohl liegend als auch stehend bevorzugt direkt an der zu bearbeitenden Schnittstelle eines Werkstücks (9) mit Hilfe mindestens einer durch ein Langloch (13,14) geschraubten Dübelschraube (34) fixierbar,

b) die Seillaufebene (M), gebildet aus der Seilantriebsrolle (4) und Seilspannrollen (5) ist zur Schnittebene (W) der Sägeseilschleife im Werkstück (9) um eine Achse (19,19') in einem beliebigen Winkel (γ) einstellbar im Bereich zwischen 0 ° und 270 °,

c) die Schwenkrolle (7) des in die Maschine einlaufenden Sägeseiltrums und die Schwenkrolle (8) des aus der Maschine auslaufenden Sägeseiltrums sind jeweils um ihre in der Seillaufebene (M) parallel zur Maschinenlängsachse liegenden geometrischen Drehachsen (D) in einem Winkelbereich von (β) = 270 ° schwenkbar,

d) der Winkel (γ) und der Winkel (β) sind einander überlagerbar zu beliebigen räumlichen Seileinlauf- bzw. Seilauslaufrichtungen,

e) ein System zur Vorschubwegverkürzung bzw. Seilschleifenspeicherung innerhalb der Seilsägemaschine ist gebildet aus wechselseitig an einem Querhaupt (10) der Vorschubeinheit (6) und am Maschinengrundkörper (2) drehbar angebrachten Spannrollen (5), wobei die Zahl der am Querhaupt (10) der Vorschubeinheit (6) angebrachten Spannrollen (5) nach dem Flaschenzugprinzip um eins höher ist, als die Gesamtzahl der am Maschinengrundkörper (2) angebrachten Spannrollen (5) und Seilantriebsrollen (4).

f) die Vorschubeinheit (6) ist pneumatisch betätigt,

g) mittels einer Schwenkvorrichtung (15) ist ein Seilwinkel (α) entsprechend dem Schnittfortschritt im Sägespalt des Werkstücks (9) anpaßbar, wodurch die Schnittvorschubkraft (F) gegenüber der Seilzugkraft (S) entsprechend der Beziehung $F = 2 \times S \times \sin \alpha/2$ erhöhbar und der Seildurchführungsabstand (B) am Werkstück (9) verminderbar ist.

2. Seilsägemaschine nach Anspruch 1, gekennzeichnet dadurch, daß die Zahl der am Querhaupt (10) der Vorschubeinheit (6) drehbar befestigten Spannrollen (5) bevorzugt vier und die Zahl der am Maschinengrundkörper (2) drehbar befestigten Spannrollen (5) und Seilantriebsrollen (4) bevorzugt drei ist, und daß eine Sägeseilführung nach dem Flaschenzugprinzip eine Verkürzung der zur Durchtrennung des Werkstücks (9) benötigten Wegstrecke (A) auf den Kolbenweg (L) des pneumatischen Vorschubzylinders (12) von L = A/4 bewirkt.

3. Seilsägemaschine nach Anspruch 1, gekennzeichnet dadurch, daß für das einlaufseitige und für das auslaufseitige Sägeseiltrum je eine Seilspannrolle (5) am Querhaupt (10) der Vorschubeinheit (6) befestigt ist und daß eine Sägeseilführung nach dem Flaschenzugprinzip eine Verkürzung der zur Durchtrennung des Werkstücks (9) benötigten Wegstrecke (A) auf den Kolbenweg (L) des pneumatischen Vorschubzylinders (12) von L = A/2 bewirkt.

4. Seilsägemaschine nach Anspruch 1 gekennzeichnet dadurch, daß jeweils ein die Seilspannrollen (5) tragendes Querhaupt (10') für das einlaufseitige und das auslaufseitige Sägeseiltrum vorgesehen ist, und jedes Querhaupt (10') durch eine eigene Vorschubeinheit (12') verschiebbar ist und daß das Sägeseil (1) nach dem Flaschenzugprinzip wechselweise durch die festen Rollen des Maschinengrundkörpers (2) und die beweglichen Rollen der beiden Querhäupter (10') geführt ist, wobei die Zahl der festen Rollen am Grundkörper (2) um eins geringer ist als die Zahl der verschiebbaren Rollen an den beiden Querhäuptern (10').

5. Seilsägemaschine nach einem der Ansprüche 1 - 4, gekennzeichnet dadurch, daß je ein Verlängerungsarm (26) links- und rechtsseitig der Mittelachse der Vorschubeinheit (6) an seinem inneren Ende über einen Gelenkbolzen (27) mit dem Querhaupt (10), (10') schwenkbar verbunden ist und mit einem Fixierbolzen (28) in der jeweiligen Endlage des Schwenkbereiches mit dem Querhaupt (10),(10') fixierbar ist und das äußere Ende des Verlängerungsarmes (26) eine drehbar befestigte Seilspannrolle (5) trägt und daß durch Schwenken der beiden Verlängerungsarme (26) in die Seilverkürzungsposition (29) die nutzbare, werkstückbedingte Wegstrecke (A) erweiterbar ist.

6. Seilsägemaschine nach Anspruch 5, gekennzeichnet dadurch, daß bei liegendem Einsatz der Maschine je ein eine drehbar befestigte Seilspannrolle (5) tragender Verlängerungsarm (43) an seinem innenliegenden Ende mit einem Anbaurollenbalken (42) über ein Gelenk (47) schwenkbar verbunden ist und mit einem Fixierbolzen (28) in der jeweiligen Endlage des Schwenkbereiches mit dem Anbaurollenbalken (42) fixierbar ist.

**7.** Seilsägemaschine nach einem der Ansprüche 1-6, gekennzeichnet dadurch, daß die Seilantriebsrolle (4), die Seilspannrolle (5) und die Schwenkrolle (7), (8) als handelsübliche Schwerlasträder ausgeführt sind, wobei das Seillaufprofil (25) durch Schleifen, Drehen oder dergleichen in den elastischen Rollenbelag (48) eingearbeitet ist.

**8.** Seilsägemaschine nach Anspruch 1, gekennzeichnet dadurch, daß mindestens ein Vorschubzylinder (12,12`) zwischen dem Maschinengrundkörper (2) und dem die Seilspannrollen (5) tragenden Querhaupt (10,10`) vorgesehen ist, welcher über einen von einem Schaltkasten (21) aus bedienbaren Regler mit konstantem, in der Höhe einstellbarem Luftdruck beaufschlagbar ist.

**9.** Seilsägemaschine nach Anspruch 1, gekennzeichnet dadurch, daß im Maschinengrundkörper (2) ein Langloch (13) für liegende Befestigung und ein Langloch (14) für stehende Befestigung der gesamten Maschine am Untergrund beziehungsweise am Werkstück (9) durch Schraubdübeln (34) oder dergleichen vorgesehen ist.

**10.** Seilsägemaschine nach Anspruch 1, gekennzeichnet dadurch, daß eine Schwenkvorrichtung (15) aus einem in zwei abgedichteten Wälzlagern um den Winkel β = 270 ° schwenkbar gelagerten Stützrohr (17) und aus einem mit dem Stützrohr (17) verschweißten Gehäuseteil (18), der die Schwenkrollenachse (19), (19') trägt, auf der die jeweilige Schwenkrolle (7) für das einlaufende und die Schwenkrolle (8) für das auslaufende Sägeseiltrum drehbar gelagert ist, besteht, wobei das einlaufende und das auslaufende Sägeseiltrum koaxial mit der geometrischen Schwenkachse (D) der Schwenkvorrichtung (15) durch das Stützrohr (17) geführt wird.

**11.** Seilsägemaschine nach Anspruch 10, gekennzeichnet dadurch, daß die Schwenkvorrichtung (15) des aus der Seilsägemaschine auslaufenden Sägeseiltrums eine Schwenkrolle (8) aufweist, die als Spülwasserzuführapparat für das Sägeseil ausgebildet ist, wobei das Spülwasser nach Durchströmung des Kühlkreislaufs des Seilzugmotors (3) in die hohlgebohrte Achse (19') und weiter über Bohrungen (24) in der mit abgedichteten Wälzlagern (23) gelagerten Schwenkrolle (8) direkt in das Seillaufprofil (25) der Schwenkrolle (8) geleitet wird.

**12.** Seilsägemaschine nach Anspruch 10, gekennzeichnet dadurch, daß die Schwenkvorrichtung (15) durch eine Klemmvorrichtung (20) in jeder anwendungsfallbedingten Winkellage feststellbar ist.

**13.** Seilsägemaschine nach Anspruch 1, gekennzeichnet dadurch, daß die Maschine aus zwei mittels Verbindungsbolzen (30) lösbaren, etwa gleich schweren und gleich großen Einheiten besteht, wobei die eine Einheit der Maschinengrundkörper (2) mit dem Seilzug und die andere Einheit die Vorschubeinheit (6) ist.

## Claims

**1.** A cable sawing machine for sawing concrete, masonry, natural rock and the like, having a sawing cable (1) provided with diamond-bearing cutting beads, comprising a main body (2) carrying machine parts, a cable pulling motor (3) which by way of a cable drive roller (4) drives a closed sawing cable loop (1), a feed unit (6), a respective pivotal roller (7, 8) for guiding the incoming and the outgoing sawing cable run and a control box (21) connected to the cable sawing machine by way of a control line, characterised by the following features:

a) the cable sawing machine can be fixed both in a lying position and also in a standing position preferably directly at the cutting location to be worked on a workpiece (9) by means of at least one stud screw (34) which is screwed through a slot (13, 14),

b) the cable movement plane (M) formed from the cable drive roller (4) and cable tensioning rollers (5) can be adjusted at any angle (γ) in the range between 0° and 270° about an axis (19, 19') relative to the cutting plane (W) of the sawing cable loop in the workpiece (9),

c) the pivotal roller (7) of the sawing cable run which passes into the machine and the pivotal roller (8) of the sawing cable run which passes out of the machine are each pivotable in an angular range of (β) = 270° about their geometrical axes of rotation (D) which are disposed parallel to the longitudinal axis of the machine in the cable movement plane (M),

d) the angle (γ) and the angle (β) can be superimposed on each other to give any spatial cable incoming or cable outgoing directions,

e) a system for advance travel shortening or cable loop storage within the cable sawing machine is formed from tensioning rollers (5) rotatably mounted alternately on a transverse beam member (10) of the feed unit (6) and on the main body (2) of the machine, wherein the number of tensioning rollers (5) mounted on the transverse beam member (10) of the feed unit (6) is higher by one in accordance with the pulley block principle than the total number of cable drive rollers (4) and tensioning rollers (5) mounted on the main body (2) of the machine,

f) the feed unit (6) is pneumatically actuated, and

g) a cable angle ($\alpha$) can be adapted by means of a pivoting arrangement (15) in accordance with the cutting progress in the sawing gap of the workpiece (9) whereby the cutting feed force (F) can be increased relative to the cable pulling force (S) in accordance with the relationship $F = 2 \times S \times \sin \alpha/2$ and the cable passage spacing (B) on the workpiece (9) can be reduced.

2. A cable sawing machine according to claim 1 characterised in that the number of tensioning rollers (5) rotatably fixed on the transverse beam member (10) of the feed unit (6) is preferably four and the number of cable drive rollers (4) and tensioning rollers (5) rotatably fixed on the main body (2) of the machine is preferably three, and that a sawing cable guide in accordance with the pulley block principle produces a shortening of the travel distance (A) required for severing of the workpiece (9) to the piston travel (L) of the pneumatic feed cylinder (12) of $L = A/4$.

3. A cable sawing machine according to claim 1 characterised in that for the sawing cable runs on the incoming side and on the outgoing side a respective cable tensioning roller (5) is fixed to the transverse beam member (10) of the feed unit (6) and that a sawing cable guide in accordance with the pulley block principle produces a shortening of the travel distance (A) required for severing of the workpiece (9) to the piston travel (L) of the pneumatic feed cylinder (12) of $L = A/2$.

4. A cable sawing machine according to claim 1 characterised in that there is provided a respective transverse beam member (10') carrying the cable tensioning rollers (5) for each of the sawing cable runs on the incoming side and the outgoing side and each transverse beam member (10') is displaceable by its own feed unit (12') and that the sawing cable (1) is guided in accordance with the pulley block principle alternately by the fixed rollers of the main body (2) of the machine and the movable rollers of the two transverse beam members (10'), wherein the number of fixed rollers on the main body (2) is lower by one than the number of displaceable rollers on the two transverse beam members (10').

5. A cable sawing machine according to one of claims 1 to 4 characterised in that a respective extension arm (26) at the left-hand side and at the right-hand side of the centre line of the feed unit (6) is pivotably connected at its inner end by way of a pivot pin (27) to the transverse beam member (10, 10') and can be fixed to the transverse beam member (10, 10') by a fixing pin (28) in the respective limit position of the range of pivotal movement and the outer end of the extension arm (26) carries a rotatably mounted cable tensioning roller (5) and that the useful travel distance (A) which is governed by the workpiece can be enlarged by pivotal movement of the two extension arms (26) into the cable shortening position (29).

6. A cable sawing machine according to claim 5 characterised in that when the machine is used in a lying position a respective extension arm (43) carrying a rotatable mounted cable tensioning roller (5) is pivotably connected at its inward end by way of a pivot (47) to an attachment roller beam (42) and can be fixed to the attachment roller beam (42) by a fixing pin (28) in the respective limit position of the range of pivotal movement.

7. A cable sawing machine according to one of claims 1 to 6 characterised in that the cable drive roller (4), the cable tensioning roller (5) and the pivotal roller (7, 8) are in the form of commercially available heavy-duty wheels, wherein the cable running profile (25) is produced in the elastic roller cover (48) by grinding, turning or the like.

8. A cable sawing machine according to claim 1 characterised in that there is provided at least one feed cylinder (12, 12') between the main body (2) of the machine and the transverse beam member (10, 10') carrying the cable tensioning rollers (5), which can be acted upon with constant compressed air which is adjustable in terms of its level by way of a regulator which can be operated from a control box (21).

9. A cable sawing machine according to claim 1 characterised in that provided in the main body (2) of the machine is a slot (13) for fixing the entire machine in a lying position to the support surface or the workpiece (9) by stud screws (34) or the like and a slot (14) for fixing the entire machine in a standing position to the support surface or the workpiece (9) by stud screws (34) or the like.

10. A cable sawing machine according to claim 1 characterised by a pivoting arrangement (15) comprising a support tube (17) pivotably mounted in two sealed rolling bearings through the angle $\beta = 270°C$ and a housing portion (18) which is welded to the support tube (17) and which carries the pivotal roller spindle (19, 19') on which the respective pivotal roller (7) for the incoming sawing cable run and the pivotal roller (8) for the outgoing sawing cable run are rotatably mounted, wherein the incoming and the outgoing sawing cable runs are guided coaxially with the geometrical pivot axis (15) of the pivot arrangement (15) through the support tube (17).

**11.** A cable sawing machine according to claim 10 characterised in that the pivoting arrangement (15) of the sawing cable run which goes out of the sawing cable machine has a pivotal roller (8) which is in the form of a flushing water feed device for the sawing cable, wherein the flushing water, after flowing through the cooling circuit of the cable pulling motor (3), is passed into the hollow-bored spindle (19') and further by way of bores (24) in the pivotal roller (8) which is mounted with sealed rolling bearings (23) directly into the cable running profile (25) of the pivotal roller (8).

**12.** A cable sawing machine according to claim 10 characterised in that the pivoting arrangement (15) can be fixed in any angular position governed by the situation of use by a clamping device (20).

**13.** A cable sawing machine according to claim 1 characterised in that the machine comprises two units which are of approximately equal weight and equal size and which can be released by means of connecting pins (30), wherein the one unit is the main body (2) of the machine with the cable line and the other unit is the feed unit (6).

## Revendications

**1.** Scie mécanique à câble pour scier du béton, de la maçonnerie, de la pierre naturelle, etc., comportant un câble de sciage (1) garni de perles de coupe contenant du diamant, et formé d'un corps de base (2) portant des pièces de machine, d'un moteur de câble (3) qui entraîne une boucle de câble de sciage fermée (1) par l'intermédiaire d'une poulie d'entraînement de câble (4), d'une unité d'avance (6), de poulies pivotantes (7, 8) destinées à guider les brins de câble de sciage entrant et sortant, respectivement, et d'un carter de commande (21) relié à la scie mécanique à câble par une ligne de commande, caractérisée

a) en ce que la scie mécanique à câble est apte à être fixée, aussi bien à l'horizontale qu'à la verticale, de préférence directement à l'intersection d'une pièce (9) à usiner, à l'aide d'au moins une douille filetée (34) vissée à travers un trou oblong (13, 14),

b) en ce que le plan de passage de câble (M) défini par la poulie d'entraînement de câble (4) et les poulies de tension de câble (5) est réglable autour d'un axe (19, 19') suivant un angle ($\gamma$) quelconque, entre 0° et 270°, par rapport au plan de coupe (W) de la boucle de câble de sciage dans la pièce à usiner (9),

c) en ce que la poulie pivotante (7) du brin de câble de sciage entrant dans la scie mécanique et la poulie pivotante (8) du brin de câble de sciage sortant de la scie mécanique sont aptes à pivoter autour de leurs axes de rotation géométriques respectifs (D) situés dans le plan de passage de câble (M) et parallèles à l'axe longitudinal de la scie mécanique, dans une plage angulaire ($\beta$) = 270°,

d) en ce que l'angle ($\gamma$) et l'angle ($\beta$) sont aptes à être superposés dans n'importe quelle direction, dans l'espace, de l'entrée ou de la sortie du câble,

e) en ce qu'un système destiné à réduire la course d'avance et à emmagasiner la boucle de câble à l'intérieur de la scie mécanique se compose de poulies de tension (5) montées en rotation, des deux côtés, sur une traverse (10) de l'unité d'avance (6) et sur le corps de base (2) de la scie mécanique, le nombre de poulies de tension (5) montées sur la traverse (10) de l'unité d'avance (6) étant supérieur de 1, selon le principe du mouflage, au nombre total de poulies de tension (5) et de poulies d'entraînement de câble (4) montées sur le corps de base (2),

f) en ce que l'unité d'avance (6) est actionnée par voie pneumatique,

g) et en ce qu'un angle de câble ($\alpha$) est apte à être adapté à l'aide d'un dispositif de pivotement (15) suivant la progression de la coupe dans la fente de sciage de la pièce (9), moyennant quoi la force d'avance de coupe (F) peut être augmentée par rapport à la force de traction de câble (S) suivant la relation $F = 2 \times S \times \sin\alpha/2$ et l'écartement de passage de câble (B) sur la pièce (9) peut être réduit.

**2.** Scie mécanique à câble selon la revendication 1, caractérisée en ce que le nombre de poulies de tension (5) fixées en rotation à la traverse (10) de l'unité d'avance (6) est de préférence de quatre tandis que le nombre de poulies de tension (5) et de poulies d'entraînement de câble (4) fixées en rotation au corps de base (2) de la scie mécanique est de préférence de trois, et en ce qu'un guidage de câble de sciage selon le principe du mouflage provoque sur la course de piston (L) du vérin d'avance pneumatique (12) une réduction de la course (A) nécessaire à la séparation de la pièce (9), de $L = A/4$.

**3.** Scie mécanique à câble selon la revendication 1, caractérisée en ce que des poulies de tension de câble respectives (5) sont fixées à la traverse (10) de l'unité d'avance (6) pour le brin situé côté entrée et pour le brin situé côté

EP 0 738 194 B1

sortie du câble de sciage, et en ce qu'un guidage de câble de sciage selon le principe du mouflage provoque sur la course de piston (L) du vérin d'avance pneumatique (12) une réduction de la course (A) nécessaire à la séparation de la pièce (9), de $L = A/2$.

4. Scie mécanique à câble selon la revendication 1, caractérisée en ce qu'il est prévu pour le brin de câble de sciage situé côté entrée et pour le brin situé côté sortie des traverses respectives (10') qui portent les poulies de tension de câble (5), et chaque traverse (10') est apte a être déplacée par une unité d'avance propre (12'), et en ce que le câble de sciage (1) est guidé alternativement, selon le principe du mouflage, par les poulies fixes du corps de base (2) de la scie et par les poulies mobiles des deux traverses (10'), le nombre de poulies fixes prévues sur le corps de base (2) étant inférieur de 1 au nombre de poulies mobiles prévues sur les deux traverses (10').

5. Scie mécanique à câble selon l'une des revendications 1 a 4, caractérisée en ce que des bras de prolongement (26) prévus respectivement à gauche et à droite de l'axe médian de l'unité d'avance (6) sont reliés, pivotants, à leur extrémité intérieure, aux traverses (10), (10') par l'intermédiaire d'axes d'articulation (27), et sont aptes à être fixés à l'aide de tiges de fixation (28) à la traverse (10), (10'), dans la position de fin de course correspondante de la zone de pivotement, tandis que l'extrémité extérieure des bras de prolongement (26) porte une poulie de tension de câble (5) fixée en rotation, et en ce que grâce à un pivotement des deux bras de prolongement (26) vers la position de raccourcissement de câble (29), la course utile (A) nécessitée par la pièce peut être augmentée.

6. Scie mécanique à câble selon la revendication 5, caractérisée en ce que dans le cas d'une utilisation de la scie à l'horizontale, un bras de prolongement (43) qui porte une poulie de tension de câble (5) fixée en rotation est relié pivotant, avec son extrémité intérieure, à une poutre de poulies rapportée (42) par l'intermédiaire d'une articulation (47), et est apte à être fixé à la poutre de poulies rapportée (42) dans la position de fin de course correspondante de la zone de pivotement, à l'aide d'une tige de fixation (28).

7. Scie mécanique à câble selon l'une des revendications 1 à 6, caractérisée en ce que la poulie d'entraînement de câble (4), la poulie de tension de câble (5) et la poulie pivotante (7), (8) sont réalisées sous la forme de roules du commerce, le profil de passage de câble (25) étant réalisé dans la garniture élastique de poulie (48) par rectification, tournage, etc.

8. Scie mécanique à câble selon la revendication 1, caractérisée en ce qu'au moins un vérin d'avance (12, 12') est prévu entre le corps de base (2) de la scie mécanique et la traverse (10, 10') qui porte les poulies de tension de câble (5), lequel vérin d'avance (12, 12') est apte à être sollicité, par l'intermédiaire d'un régulateur à actionner à partir d'un coffret électrique (21), à l'aide d'une pression d'air constante réglable en hauteur.

9. Scie mécanique à câble selon la revendication 1, caractérisée en ce qu'il est prévu dans le corps de base (2) un trou oblong (13) pour une fixation à l'horizontale et un trou oblong (14) pour une fixation à la verticale de l'ensemble de la scie mécanique au substrat ou à la pièce à usiner (9) à l'aide de douilles filetées (34) ou d'éléments similaires.

10. Scie mécanique à câble selon la revendication 1, caractérisée en ce qu'un dispositif de pivotement (15) se compose d'un tube d'appui (17) monté dans deux paliers à roulement étanches pour pouvoir pivoter suivant l'angle $\beta = 270°$, et d'un élément formant carter (18) qui est soudé au tube d'appui (17) et qui porte l'axe de poulie pivotante (19), (19') sur lequel sont respectivement montées en rotation la poulie pivotante (7) prévue pour le brin de câble entrant et la poulie pivotante (8) prévue pour le brin de câble sortant, les brins de câble de sciage entrant et sortant traversant le tube d'appui (17) coaxialement par rapport à l'axe de pivotement géométrique (D) du dispositif de pivotement (15).

11. Scie mécanique à câble selon la revendication 10, caractérisée en ce que le dispositif de pivotement (15) du brin de câble de sciage sortant de la scie mécanique comporte une poulie pivotante (8) qui est conçue comme un appareil d'amenée d'eau de rinçage pour le câble, l'eau de rinçage, après avoir traversé le circuit de refroidissement du moteur de câble (3), pénétrant dans l'axe creux (19') puis, par l'intermédiaire de perçages (24) prévus dans la poulie pivotante (8) pourvue de paliers de roulement étanches (23), directement dans le profil de passage de câble (25) de la poulie pivotante (8).

12. Scie mécanique à câble selon la revendication 10, caractérisée en ce que le dispositif de pivotement (15) est apte à être bloqué par un dispositif de blocage (20) dans chaque position angulaire nécessitée par le cas d'application.

13. Scie mécanique à câble selon la revendication 1, caractérisée en ce qu'elle se compose de deux unités aptes a être détachées grâce à des tiges de liaison (30) et à peu près de même poids et de même taille, une unité étant définie par le corps de base (2) de la scie mécanique avec le câble, et l'autre par l'unité d'avance (6).

# Fig. 1

# Fig. 2

# Fig. 3

# Fig. 4

# Fig. 5

# Fig. 6

# Fig. 7

# Fig. 8

# Fig. 9

# Fig. 10

# Fig. 11

# Fig. 12

# Fig. 13

# Fig. 14

# Fig. 15

α = 120,0°

# Fig. 16

S

S

60°

F

α/2

α = 120°

α/2

F= 2 x S x sin α/2

# Fig. 17

$\gamma = 270°$

$\gamma = 225°$

D

15

4   5   10   6

8   W

M                                    M

36

1

W

7   9   19   37   34   35

# Fig. 18

**1.Grenzwertleistungsmelder**     **2.Proportionaldruckregler**

P
Grenzwert

P
Istwert

Antrieb
ein

S
Sollwert

S

S
Istwert